# EUROPÄISCHE PATENTSCHRIFT

(11) **EP 0 388 995 B1**
(45) Veröffentlichungstag und Bekanntmachung des Hinweises auf die Patenterteilung: **12.05.1993**
(21) Anmeldenummer: 90108024.2
(22) Anmeldetag: 22.10.1987
(51) Int. Cl.: A01C 15/18, A01B 73/04

(54) **Verteilmaschine, insbesondere Grossflächenstreuer**
Spreader, especially a large-capacity spreader
Epandeur, spécialement épandeur à grand travail

(30) Priorität: 05.11.1986 DE 3637708; 15.04.1987 DE 3712843; 03.10.1987 DE 3733488
(43) Veröffentlichungstag der Anmeldung: 26.09.1990
(62) Teilanmeldung aus: 87115467.0
(73) Patentinhaber: Amazonen-Werke H. Dreyer GmbH & Co. KG, D-49205 Hasbergen (DE)
(72) Erfinder: Higgen, Reinhard, D-2872 Hude 1 (DE); Reinke, Wilfried, D-2900 Oldenburg (DE); Rostalski, Fritz, D-2870 Delmenhorst (DE)

(56) Entgegenhaltungen:
- WO-A-86/07522
- DE-A- 3 230 489
- FR-A- 2 443 794

## Beschreibung

Die Erfindung betrifft eine Verteilmaschine, insbesondere Großflächendüngerstreuer, gemäß des Oberbegriffes des Patentanspruches 1. Eine derartige Maschine ist in der Praxis bekannt geworden.

In der Praxis hat sich nun gezeigt, daß ein einseitiges Einklappen der Streuausleger, welche pendelnd aufgehängt sind, nicht ohne weiteres möglich ist, da sich der Abstand des Schwerpunktes des einzuklappenden Streuauslegers in bezug auf die Pendelachse, um die die Streugutausleger im ausgeklappten Zustand frei pendeln, können, durch das einseitige Einklappen eines Streuauslegers, verändert. Diese Schwerpunktverlagerung führt zu einer Aufhebung des bei ausgeklappten Streuauslegern wirksamen Gleichgewichtes, durch welche die jeweiligen Streuausleger parallel zum Rahmen der Verteilmaschine geführt werden, so daß unterschiedlich große Drehmomente von den jeweils seitlich der Pendelachse sich erstreckenden Streuauslegern erzeugt werden. Diese unterschiedlich großen Drehmomente führen zu einem Verschwenken der Ausleger um die Pendelachse, wobei sich die Streuausleger schräg stellen. Dieses Verschwenken der Streuausleger um die Pendelachse führt dazu, daß die hinteren Enden der Ausleger nicht ordnungsgemäß in entsprechende Fang- und Arretierungsvorrichtungen fassen können, die die Ausleger während des Transportes fest arretieren sollen. Diese Tatsache des sich Schrägstellen der Streuausleger bei einseitig eingeklapptem Streuausleger wird besonders begünstigt, wenn die Verteilmaschinen quer zum Hang stehen. Ebenfalls ist es aus den bereits erwähnten Gründen nicht möglich, den Ausbringvorgang des sich im Vorratsbehälter der Verteilmaschine befindlichen Materials durchzuführen, da das eine Ende der sich schrägstellende Ausleger, besonders bei Verteilmaschinen großer Arbeitsbreite, die Bodenoberfläche berührt und es somit zu Beschädigungen an dem Ausleger kommt, ganz abgesehen von dem durch die Schräglage der Ausleger evtl. hervorgerufenen Verteilungenauigkeiten des auszubringenden Materials.

Des weiteren ist das Ausklappen der Ausleger, vor allem bei quer zum Hang stehenden Verteilmaschinen für den sich auf der hangaufwärtigen Seite der Verteilmaschine befindlichen Streuausleger nicht ohne weiteres möglich, da er sich entgegen der auf ihn wirkenden Schwerkraft bewegen müßte. Nach Lösen der Fang- und Arretierungsvorrichtungen zunächst der auf der hangabwärtigen Seite befindliche Streuausleger aus, was eine Verschwenkung der Streuausleger um die Pendelachse infolge der unterschiedlichen Drehmomente bewirkt, so daß der auf der hangaufwrärtigen Seite der Verteilmaschine angeordnete Streuausleger nicht selbständig aus der Arretierungsvorrichtung heraus kommt.

Der Erfindung liegt nun die Aufgabe zugrunde, diese vorgeschilderten Nachteile in einfacher Weise zu beseitigen.

Diese Aufgabe wird erfindungsgemäß durch die kennzeichnenden Merkmale des Anspruches 1 gelöst.

Infolge dieser Maßnahmen wird zwangsläufig beim Einklappen des Verteilergestänges über die Verriegelungselemente das Verteilergestänge in eine parallele Stellung zum Rahmen der Verteilmaschine gebracht, so daß ohne zusätzliche Hilfsmittel und Arbeiten das Verteilergestänge in einfacher Weise eingeklappt und arretiert werden kann. Die Verriegelungselemente sind mit den Auslegern des Verteilergestänges gekoppelt und derart steuerbar, daß beim Einklappen des Ausleger automatisch eine Parallelstellung des Verteilergestänges zum Rahmen der Verteilmaschine erfolgt. Darüber hinaus wird durch die Verriegelungselemente beim Ausklappen erreicht, daß beim Ausklappen mit der eigenen Gewichtskraft des in Arbeitsstellung stehenden Auslegers die Bewegung des in Transportstellung zur Arbeitsstellung schwenkenden Auslegers eingeleitet wird, so daß selbst, wenn die Verteilmaschine quer zum Hang steht, ein sicheres Ausklappen des Verteilergestänges aus der Transport- in die Arbeitsstellung sichergestellt ist.

In einfacher Weise wird dieses dadurch erreicht, daß die eine Seite des Kipphebels mit dem Rahmen der Verteilmaschine zusammenwirkt und daß die andere Seite des Kipphebels mit dem jeweiligen einklappbaren Abschnitt des Auslegers verbunden ist.

Weitere Einzelheiten der Erfindung sind den übrigen Unteransprüchen, der Beispielsbeschreibung und den Zeichnungen zu entnehmen. Hierbei zeigen
Fig. 1 eine erfindungsgemäß ausgebildete Verteilmaschine in der Seitenansicht,

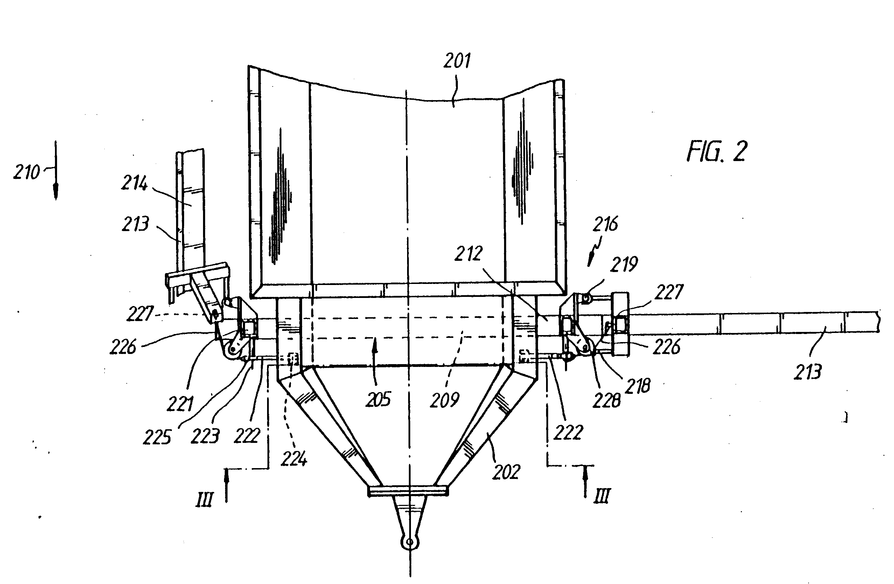

Fig. 2 die Anordnung des Verteilergestänges an dem Rahmen der Verteilmaschine in der Ansicht II - II,
Fig. 3 die Anordnung des Verteilergestänges an dem Rahmen der Verteilmaschine in der Ansicht III - III,

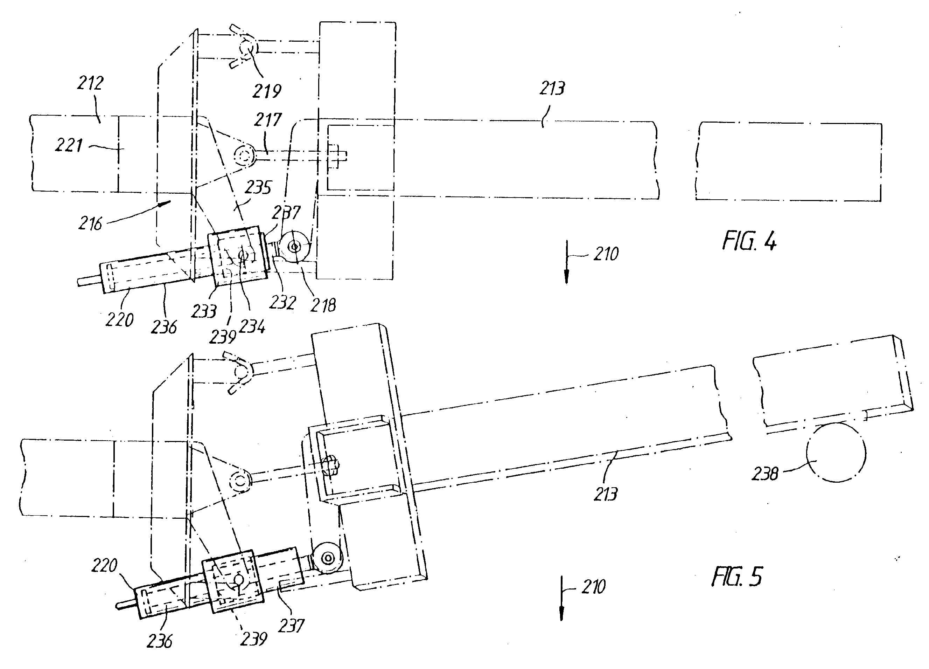

Fig. 4 die Anordnung und Ausbildung des die Ausleger des Verteilergestänges einklappenden Hydraulikzylinders in Prinzipdarstellung und Draufsicht und
Fig. 5 Die Ausbildung des Hydraulikzylinders und die Funktionsweise, wenn der Ausleger des Verteilergestänges an ein Hindernis anstößt, in Prinzipdarstellung und in der Draufsicht.

Die Verteilmaschine ist beispielsweise als Großflächendüngerstreuer ausgebildet und mit einem Vorratsbehälter 201, einem Rahmen 202 und einem Fahrwerk 203 ausgestattet. In dem unteren Bereich des Vorratsbehälters 201 befindet sich das antreibbare und als Förderband ausgebildete Förderorgan 204. In dem vorderen Bereich 205 des Vorratsbehälters 201 ist die über den Schieber 206 einstellbare Austrittsöffnung 207 angebracht.

Das Förderband 204 ist vorzugsweise in zwei entgegengesetzte Förderrichtungen antreibbar. Dieses Förderband 204 wird von der Schlepperzapfwelle über die Antriesbwelle 208 angetrieben.

Des weiteren weist der Vorratsbehälter 201 eine in seinem hinteren bereich angeordnete weitere Austrittsöffnung auf, unterhalb der ein als Zentrifugalstreuwerk ausgebildetes Streuorgan abnehmbar angeordnet ist.

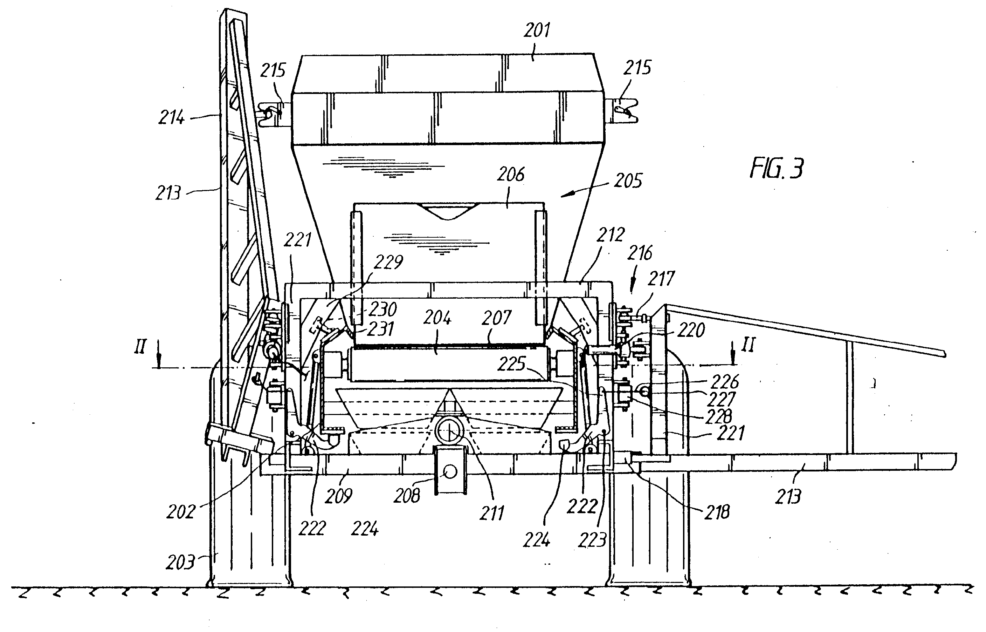

Im Bereich der vorderen Austrittsöffnung 207 des Vorratsbehälters 201 ist das als Schneckenstreuwerk 209 ausgebildete Streuorgan um die in Fahrtrichtung 210 verlaufende Achse 211 pendelnd an dem Pendelrahmen 212 angeordnet. Die sich seitlich neben dem Vorratsbehälter 201 des Großflächendüngerstreuers und über die gesamte Arbeitsbreite der Verteilmaschine erstreckenden Streuschneckenausleger 213 sind ebenfalls an dem Pendelrahmen 212 befestigt. In der Transportstellung 214 befinden sich die Streuschneckenausleger 213 in nach hinten-oben ragender Position, wobei die hinteren Enden der Ausleger 213 in die sich am Vorratsbehälter 201 befindlichen Fang- und Arretierungsvorrichtungen 215 fassen, so daß die Streuschneckenausleger 213 während des Transportes fest arretiert sind, wie dieses in Fig. 3 für den in Fahrtrichtung gesehen rechten Ausleger dargestellt ist. Der link Ausleger ist in Arbeitsstelung dargestellt.

Die Ausleger 213 sind über die Dreigelenkabstützung 216 am Pendelrahmen 212 angelenkt. Die Dreigelenkabstützung 216 weist den oberen Anlenkpunkt 217 und die beiden unteren Anlenkpunkte 218 und 219 auf. Die Lage der beiden Anlenkpunkte 218 und besonders 219 am Ausleger sowie am Pendelrahmen ist veränderbar, so daß sich verschiedene Dreigelenkabstützungen ergeben, damit man verschieden schräge Lagen der Ausleger in ihrer Transportstellung erreichen kann. Hierdurch ist es möglich, die Ausleger nur so hoch wie ebene erforderlich schräg zu stellen, daß sie gerade über di Reifen sich in Transportstellung befinden. Über den einfach wirkenden Hydraulikzylinder 220 lassen sich die jeweiligen Ausleger 213 in die Transportstellung 214 überführen, wobei eine gedachte Verbindungslinie zwischen dem oberen Anlenkpunkt 217 und dem unteren Anlenkpunkt 219 der Dreigelenkabstützung 216 eine schräge Schwenkachse bildet.

An den beiden aufrechten Trägern 221 des Pendelrahmens 212 ist jeweils ein Kipphebel 222 drehbar gelagert, der jeweils um die in Fahrtrichtung 210 verlaufende Befestigungsachse 223 schwenkbar ist. Der untere Abschnitt 224 des Kipphebels 222 wirkt mit dem Rahmen 202 des Großflächendüngerstreuers zusammen, wobei am aufrechten Hebelarm 225 des Kipphebels 222 ein als Seil 226 ausgebildetes Zugelement angreift. Dieses Zugelement 226 ist an seinem anderen Ende in der an dem Streuschneckenausleger 213 angeschweißten Befestigungsöse 227 befestigt. Zwischen den beiden Anlenkpunkten des Zugelementes 226 ist im Bereich des Seiles 226 und in einem Abstand von dem jeweiligen Gelenk 219, um welches die Ausleger 213 einklappbar sind, ein als Umlenkrolle 228 ausgebildetes Umlenkelement angeordnet.

Um ein exaktes Pendeln des Pendelrahmens 212 zu gewährleisten weist der Pendelrahmen 212 die beiden U-förmigen Führungsschienen 230 auf, in denen die Führungsrollen 230, die über die Halterungen 231 mit dem Rahmen 202 des Großflächendüngerstreuers verbunden sind, sich bewegen.

Soll nun einer der beiden Ausleger 213 von der Arbeitsin die Transportstellung 214 überführt werden, wird der Hydraulikzylinder 220 mit Hydrauliköl beaufschlagt. Dies hat zur Folge, daß die Kolbenstange 232 ausfährt und der Ausleger 213 um die gedachte, durch die Anlenkpunkte 217 und 219 der Dreigelenkabstützung 216 verlaufende schräge Schwenkachse verschwenkt wird. Dieses Verschwenken des Streuauslegers 213 führt dazu, daß der Kipphebel 222 vom Zugelement 226, welches von der ein einem Abstand zu der gedachten Schwenkachse angeordneten Umlenkrolle 227 umgelenkt wird. Dieses Sannen des Seiles 226 führt zu einer Kippbewegung des Kipphebels 222, wobei der aufrechte Hebelarm 225 quer zur Fahrtrichtung 210 in Richtung auf die Umlenkrolle 228 verschwenkt wird. Dadurch, daß der Hebelarm 225 in Richtung auf die Umlenkrolle 228 um die Kipphebelbefestigungswelle 223 verschwenkt wird, wirkt der untere Abschnitt 224 des Kipphelbs 222 mit dem Rahmen 202 des Großflächendüngerstreuers zusammen. Dieses hat zur Folge, daß der durch das einseitige Einklappen des Streugutauslegers 213 um die Pendelachse 211 verschwenkte Pendelrahmen 212 wieder parallel zu dem Rahmen 202 des Großflächendüngerstreuers zurückgeführt wird. Dadurch, daß durch die Schwenkbewegung des jeweiligen Auslegers 213 ein Spannen des Seiles 226 erfolgt, wird automatisch eine Steuerung des Kipphebels 222 hervorgerufen, der sich dann unter dem Rahmen 202 des Großflächendüngerstreuers abstützt und dadurch den Pendelrahmen des Streuschneckenwertes 209 wieder geradestellt bzw. parallel zum Rahmen 202 des Großflächendüngerstreuers. Dadurch, daß der Pendelrahmen 212 bei einem Einschwenken der Streugutausleger 213 über die Kipphebel 222 wieder in die parallele Lage zum Rahmen 202 des Großflächendüngerstreuers zurückgeführt wird, können die hinteren Enden der Streugutausleger 213 Streutgutauslegern beim Einklappen des Verteilergestänges 213 in die wirksam werdenden Verriegelungselemente 215 automatisch einrasten.

Sollen nun die Ausleger 213 von der Transportstellung 214 in die Arbeitsstellung geschwenkt werden, so ist zunächst die Arretierung der Verriegelungselemente 215 zu lösen und die sich schräg nach hinten-oben befindlichen Ausleger 213 schwenken gleichzeitig und selbstverständlich ohne fremde Krafteinwirkung von der Transportstellung 214 in die Arbeitsstellung. Steht nun aber der Großflächendüngerstreuer quer zum Hang, dann schwenkt zunächst aufgrund der wirkenden Schwerkraft nur der hangabwärts gerichtete Streuausleger von seiner Transportin die Arbeitsstellung und der hangaufwärts gerichtete Ausleger verbleibt zunächst in der Arretierung, da er sich nach oben, entgegen der Schwerkraft, bewegen müßte. Da nun aber im eingeklappten Zustand beider Streugutausleger 213 die unteren Abschnitt 224 der jeweiligen Kipphebel 222 mit dem Rahmen 202 des Großflächendüngerstreuers zusammenwirken, wird nun durch das Ausschwenken des hangabwärts gerichteten Auslegers zunächst ein Verschwenken des Pendelrahmens 212 durch den Kipphebel 222 des hangaufwärts sich befindlichen Auslegers und zwar auf der hangabwärtigen nach unten und auf der hangaufwärtigen nach oben hervorgerufen. D.h., dieses Verschwenken des Pendelrahmens 212, das durch das Kräfteungleichgewicht durch die unterschiedlichen Lagen der Streugutausleger 213 hervorgerufen wird, wird eine Kraft vom Rahmen 202 des Großflächendüngerstreuers auf den unteren Bereich 224 des Kipphebels 222 des sich hangaufwärts befindlichen auslegers ausgeübt, die dazu führt, daß der obere Hebelarm 225 des Kipphebels 222 eine in Richtung auf die Pendelachse 211 gerichtete Schwenkbewegung um die Kipphebeldrehachse 223 hervorruft. Hierdurch wird das um die Umlenkrolle 228 geführte Seil 226 gespannt, so daß der hangaufwärts gerichtete Streugutausleger 213 aus dem Verriegelungselement 215 herausgezogen wird, so daß auch der hangaufwärts gerichtete Streugutausleger in seine Arbeitsstellung schwenken kann. Der hangaufwärts sich befindliche Ausleger also wird mit einer geringen Zeitverzögerung ausgeklappt, nach dem er automatisch von hangabwärts sich befindlichen Auslegern aus der Arretierungsvorrichtung 215 herausgezogen worden ist. Nachdem der hangaufwärts gerichtete Ausleger sich aus der Arretierung 215 gelöst hat, schwenkt der Ausleger aufgrund seiner schrägen Schwenkachse in die Arbeitsstellung, so daß auch hier ein Verschwenken der Ausleger von der Transport- in die Arbeitsstellung ohne fremde Krafteinwirkung erfolgt.

Des weiteren sind Ausleger 213 in einer Dreigelenkabstützung 216 an dem Pendelrahmen 212 aufgehängt, um einen Gegenfahrschutz zu gewährleisten. D.h., wenn der Ausleger 213 auf ein Hindernis auftrifft, hat er die Möglichkeit, sich ungehindert aus der Dreigelenkabstützung 216 zu lösen. Um ein ungehindertes Lösen des jeweiligen, auf ein Hindernis auftreffenden Auslegers 213 aus der Dreigelenkabstützung 216 zu ermöglichen, ist der für das Einklappen des Verteilergestänges 213 aus der Arbeits- in die Transportstellung notwendige Hydraulikzylinder 220 in einer Schiebeführung 233 gelagert. Weicht nun ein Ausleger 213 einem Hindernis aus, so wird der Zylinder 220 aus dieser Schiebeführung 233 herausgezogen, ohne den Ausleger 213 festzuhalten, wodurch verhindert wird, daß ein Vakuum im Zylinder 220 entsteht bzw. Luft in das Hydrauliksystem gelangen kann. Diese Schiebeführung 233 ist schwenkbar über die Befestigungszapfen 234 an den Haltearmen 235 befestigt. Die Haltearme 235 wiederum sind an dem Pendelrahmen 212 angeschweißt. Die Schiebeführung 233 weist zwei unterschiedlich große Bohrungen auf, die dem jeweiligen Durchmesser der Bauteile 236 und 237 des Hydraulikzylinders 220 entsprechen. Trifft nun ein Ausleger 213 auf ein Hindernis 238 gemäß Fig. 5, wird der Hydraulikzylinder 220 aus der Schiebeführung 233 herausgezogen, wodurch der Ausleger 213 ungehindert dem Hindernis 238 ausweichen kann. Der Ausleger 213 wird also nicht vom Hydraulikzylinder 220 festgehalten.

Soll nun der jeweiligen Ausleger 213 in die Transportstellung 214 überführt werden, wird der Hydraulikzylinder 220 mit Drucköl beaufschlagt, so daß die Kolbenstange 232 ausfährt und der Ausleger 213 um den Drehpunkt 219 verschwenkt wird. Beim Beaufschlagen des Hydraulikzylinders 220 mit Drucköl stützt sich dieser mit dem größeren Durchmesser des Bauteiles 237 an der Kante 239 der Schiebeführung 233 ab, so daß das Gestänge 213 in gewünschter Weise in die Transportstellung 214 überführt wird.

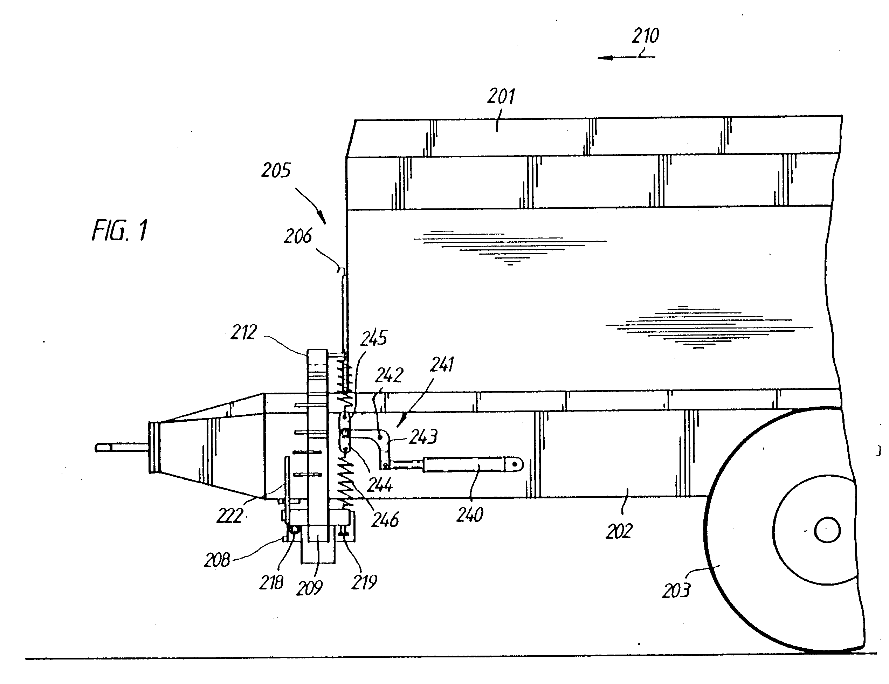

Des weiteren ist der Pendelrahmen 212 mit einer über einen hydraulischen Zylinder 240 betätigbaren Hangausgleichssteuerung 241 ausgestattet. Diese Hangausgleichssteuerung 241 weist den am Rahmen 202 angelenkten Hydraulikzylinder 240 auf, der an einem um den Drehpunkt 242 drehbar gelagerten Stellhebel 243 angreift. An diesem Stellhebel 243 sind die beiden Anlenkhebel 244 und 245 beweglich angelenkt, wobei sich an diesen Anlenkhebeln 244 und 245 die Zugfedern 246 anschließen, die an ihrem anderen Ende mit dem Pendelrahmen 212 verbunden sind. Wird der Großflächendüngerstreuer auf ebener Bodenoberfläche bewegt, befindet sich die Hangausgleichssteuerung 241 in der Normalstellung gemäß Fig. 1, da sich das Verteilergestänge 213, welches in Fig. 1 der Übersicht habler nicht dargestellt ist, immer parallel zum Rahmen 202 des Großflächendüngerstreuers einstellt. Befindet sich nun der Rahmen 202 des Großfächendüngerstreuers nicht parallel zur Bodenoberfläche, d.h., wenn beispielsweise ein Laufrad in einer Erdfurche läuft, so daß sich der Rahmen 202 schräg gegenüber der Bodenoberfläche bewegt, ist es nun notwendig, daß sich die parallel zum Rahmen 202 geführten Ausleger 213 entsprechend der Neigung des Rahmens 202 gegenüber der Bodenoberfläche zu verschwenken, so daß die Ausleger 213 wieder parallel zur Bodenoberfläche geführt werden. Dieses Verschwenken der Ausleger 213 erfolgt über den Hydraulikzylinder 240 der Hangausgleichssteuerung 241, in dem dieser Hydraulikzylinder 240 entweder ein- oder ausgefahren wird. Dieses Ein- oder Ausfahren des Hydraulikzylinders 240 bewirkt, daß der Pendelrahmen 212 um die Pendelachse 211 in die eine oder andere Richtung verschwenkt wird, so daß die Ausleger 213 wieder parallel zur Bodenoberfläche und nicht parallel zum Rahmen 202 des Streuers geführt werden. Die Hangausgleichssteuerung 241 und das Ansprechverhalten der Kipphebel 222 ist derart aufeinander abgestimmt, daß beim Betätigen der Hangausgleichssteuerung 241 diese Kipphebel 222 noch nicht ansprechen, d.h., daß das Zugelement 226 noch nicht gespannt wird und die Kipphebel 222 in ungewünschter Weise mit dem Rahmen 202 zusammenwirken.

## Patentansprüche

1. Verteilmaschine, insbesondere Großflächendüngerstreuer, mit einem Rahmen (202), einem Vorratsbehälter (201) und den Vorratsbehälter (201) weit überragenden Verteilergestänge (213), wie Streuauslegern oder Streuschnecken, den über eine Fördereinrichtung (204) oder Dosiereinrichtung das sich im Vorratsbehälter (201) befindliche Material zugeführt wird und die über Gelenke (216) an die Verteilmaschine in eine Transgortstellung seitlich oder nach hinten einklappbar sind, wobei die Verteilergestänge (213), insbesondere über an ihnen befestigte Spannelemente in der Arbeitsstellung gehalten werden, und um eine horizontale und in Fahrtrichtung (210) weisende Achse (211) pendeln können, dadurch gekennzeichnet, daß zwischen dem Verteilergestänge (213) und dem Rahmen (202) der Verteilmaschine beim Einklappen des Verteilergestänges (213) zwangsweise wirksam werdende Verriegelungs elemente (222) angeordnet sind, mit denen das Verteilergestänge verriegelbar ist, daß diese Verriegelungselemente (222) einerseits mit dem Rahmen (202) der Verteilmaschine zusammenkwirken und andererseits mit dem jeweiligen einklappbaren Abschnitt des Verteilergestänges (213) verbunden sind, wobei diese Verriegelungselemente (222) mittels der Verbindung mit dem jeweiligen ein Klappbaren Abschnitt des Verteilergestänges derart Steuerbar sind, daß beim Ein klappen des ein Klappbaren Abschnitts des Verteilergestänges eine Parallel-Stellung des Verteilergestänges zum Rahmen der Verteilmaschine erfolgt.

2. Verteilmaschine nach Anspruch 1, dadurch gekennzeichnet, daß die Verriegelungselemente (222) weiterhin derart von den Auslegern (213) des Verteilergestänges steuerbar sind, daß beim Ausklappen mit der Eigengewischtskraft des in Arbeitsstellung stehenden Auslegers (213) die Bewegung des in Transportstellung (214) zur Arbeitsstellung schwenkenden Auslegers (213) eingeleitet wird.

3. Verteilmaschine nach Anspruch 1 und/oder 2, dadurch gekennzeichnet, daß an dem Ausleger (213) bzw. dem Pendelrahmen (212), an dem die Ausleger (213) des Verteilergestänges angeordnet sind, auf jeder Seite Kipphebel (222), vorzugsweise Kniehebel, angeordnet sind, daß die eine Seite (224) des Kipphebels (222) mit dem Rahmen (202) der Verteilmaschine zusammenwirkt, und daß die andere Seite (225) des Kipphebels (222) mit dem jeweiligen einklappbaren Abschnitt des Auslegers (213) verbunden ist.

4. Verteilmaschine nach Anspruch 3, dadurch gekennzeichnet, daß zwischen dem Kipphebel (222) und dem Ausleger (213) ein Zugelement (226), vorzugsweise ein Seil angeordnet ist.

5. Verteilmaschine nach Anspruch 4, dadurch gekennzeichnet, daß im Bereich des Seiles (226) und in einem Abstand von dem Gelenk (219), um welches der Ausleger (213) einklappbar ist, ein Umlenkelement (228), vorzugsweise eine Umlenkrolle oder Umlenkkufe angeordnet ist.

6. Verteilmaschine nach Anspruch 3, dadurch gekennzeichnet, daß die Kipphebel (222) und/oder das Seil einstellbar ausgebildet sind.

7. Verteilmaschine nach Anspruch 1, dadurch gekennzeichnet, daß der Ausleger (213) mit einer über einen hydraulischen Zylinder (240) betätigbaren Hangausgleichsteuerung (241) versehen ist.

8. Verteilmaschine nach Anspruch 1, dadurch gekennzeichnet, daß die Ausleger (213) über vorzugsweise einfach wirkende Hydraulikzylinder (220) in Transportstellung einklappbar sind.

9. Verteilmaschine nach Anspruch 7, dadurch gekennzeichnet, daß die Hydraulikzylinder (220) in einer Schiebeführung (233) angeordnet sind.

## Claims

1. Distributing machine, more especially a large-capacity fertilizer spreader, including a frame (202), a hopper (201), and distributor tube assemblies (213), which protrude far beyond the hopper (201), such as spreader booms or spreader screws, to which the material situated in the hopper (201) is supplied via the intermediary of a conveyor (204) or metering arrangement, and which are pivotable on the distributing machine laterally or rearwardly into a travelling position via the intermediary of pivots (216), the distributor tube assemblies (213) being retained in the operational position, more especially via the intermediary of clamping elements mounted on said assemblies, and being pivotable about a horizontal axis (211) extending in the direction of travel (210), characterised in that locking members (222) are disposed between each distributor tube assembly (213) and the frame (202) of the distributing machine, which locking members automatically become operational during the pivotal movement of the distributor tube assembly (213), and with which locking members the distributor tube assembly is lockable, in that these locking members (222), on the one hand, co-operate with the frame (202) of the distributing machine and, on the other hand, are connected to the respective pivotable portion of the distributor tube assembly (213), these locking members (222) being controllable by means of the connection with the respective pivotable portion of the distributor tube assembly in such a manner that, when the pivotable portion of the distributor tube assembly is pivoted in position, the distributor tube assembly lies parallel to the frame of the distributing machine.

2. Distributing machine according to claim 1, characterised in that, moreover, the locking members (222) are so controllable by the booms (213) of the distributor tube assembly that the movement of the boom (213), which pivots towards the operational position in the travelling position (214), is introduced, during the outward pivotal movement, by the force of the inherent weight of the boom (213) in its operational position.

3. Distributing machine according to claim 1 and/or 2, characterised in that pivotal levers (222), preferably toggle levers, are disposed at each end of the boom (213) or respectively of the pivotal frame (212), on which the booms (213) of the distributor tube assembly are disposed, in that one end (224) of the pivotal lever (222) co-operates with the frame (202) of the distributing machine, and in that the other end (225) of the pivotal lever (222) is connected to the respective pivotable portion of the boom (213).

4. Distributing machine according to claim 3, characterised in that a towing means (226), preferably a rope, is disposed between the pivotal lever (222) and the boom (213).

5. Distributing machine according to claim 4, characterised in that a guide member (228), preferably a guide roller or guide runner, is disposed in the region of the rope (226) and at a spacing from the pivot (219), about which the boom (213) is pivotable.

6. Distributing machine according to claim 3, characterised in that the pivotal lever (222) and/or the rope are adjustable.

7. Distributing machine according to claim 1, characterised in that the boom (213) is provided with a slope compensating control (241), which is actuatable via the intermediary of a hydraulic cylinder (240).

8. Distributing machine according to claim 1, characterised in that the booms (213) are pivotable into the travelling position via the intermediary of, preferably, single-acting hydraulic cylinders (220).

9. Distributing machine according to claim 7, characterised in that the hydraulic cylinders (220) are disposed in a displacable guide (233).

## Revendications

1. Epandeur, notamment épandeur d'engrais pour grandes surfaces comportant un châssis (202) avec un réservoir d'alimentation (201) et des bras d'épandage (213) qui débordent largement du réservoir (201) ainsi que des flèches d'épandage ou vis d'épandage qui sont alimentées par un dispositif de transfert (204) ou dispositif de dosage en produit contenu dans le réservoir (201) et qui peuvent être basculées par l'intermédiaire d'articulations (216) de l'épandeur ou une position déployée vers l'arrière, les bras d'épandage (213) étant maintenus en position de travail notamment par des éléments de tension fixés à ces bras et ils peuvent exécuter un mouvement pendulaire autour d'un axe (211) horizontal, dirigé dans la direction de déplacement (210), épandeur caractérisé en ce qu'entre les bras (213) et le châssis (202) de l'épandeur, lors du mouvement de rabattement du bras (213), il y a des éléments de verrouillage (222) qui se mettent en oeuvre de manière forcée, par lesquels les bras peuvent être verrouillés pour que ces éléments de verrouillage (222) coopèrent d'une part avec le châssis (202) de l'épandeur et d'autre part, avec le segment chaque fois rabattable du bras (213), ces éléments de verrouillage (222) étant commandés par la liaison avec le segment respectivement rabattable du bras d'épandage de façon que lors du rabattement du segment rabattable du bras, le bras se mette dans une position parallèle au châssis de l'épandeur.

2. Epandeur selon la revendication 1, caractérisé en ce que les éléments de verrouillage (222) sont commandés en outre par les bras (213) de la flèche d'épandage, de façon que lors du déploiement sous l'effet du propre poids du bras (213) qui est en position de travail, cela induise le mouvement du bras (213) qui est encore en position de transport (214) pour basculer vers la position de travail.

3. Epandeur selon la revendication 1 et/ou 2, caractérisé en ce que sur le bras (213) ou le châssis pendulaire (212) portant les bras (213) de la flèche d'épandage, il y a de chaque côté des leviers basculants (222) de préférence des leviers à genouillère pour qu'un côté (224) du levier basculant (222) coopère avec le châssis (202) de l'épandeur et que l'autre côté (225) du levier basculant (222) soit relié avec le segment chaque fois rabattable du bras (213).

4. Epandeur selon la revendication 4, caractérisé en ce qu'entre le levier basculant (222) et le bras (213), il est prévu un élément de traction (226) de préférence un câble.

5. Epandeur selon la revendication 4, caractérisé en ce qu'au niveau du câble (226) et à une distance de l'articulation (219) autour duquel bascule le bras (213), il est prévu un élément de renvoi (228) de préférence un galet de renvoi ou un patin de renvoi.

6. Epandeur selon la revendication 3, caractérisé en ce que les leviers basculants (222) et/ou le câble, sont réglables.

7. Epandeur selon la revendication 1, caractérisé en ce que le bras (213) est muni d'une commande de compensation de pente (241) actionnée par un vérin hydraulique (240).

8. Epandeur selon la revendication 1, caractérisé en ce que les bras (213) peuvent être rabattus en position de transport de préférence par des vérins hydrauliques (220) à simple effet.

9. Epandeur selon la revendication 7, caractérisé en ce que les vérins hydrauliques (220) sont placés dans un moyen de guidage en translation (233).
